Europäisches Patentamt

European Patent Office

Office européen des brevets

(19)

(11) Numéro de publication: **0 082 750**
**B1**

(12) FASCICULE DE BREVET EUROPEEN

(45) Date de publication du fascicule du brevet: **18.03.87**

(51) Int. Cl.⁴: **G 01 S 1/20,** G 01 S 5/10

(21) Numéro de dépôt: **82402236.2**

(22) Date de dépôt: **07.12.82**

(54) Dispositif récepteur d'au moins deux systèmes de radio-navigation.

(30) Priorité: **18.12.81 FR 8123728**

(43) Date de publication de la demande:
**29.06.83 Bulletin 83/26**

(45) Mention de la délivrance du brevet:
**18.03.87 Bulletin 87/12**

(84) Etats contractants désignés:
**BE DE GB SE**

(56) Documents cités:
**US-A-3 343 169**
**US-A-3 754 260**
**US-A-3 936 763**
**US-A-3 936 828**
**US-A-4 138 680**

**PATENTS ABSTRACTS OF JAPAN, vol. 6, no. 116(P-125)994r, 29 juin 1982;**

(73) Titulaire: **THOMSON-CSF**
**173, Boulevard Haussmann**
**F-75379 Paris Cedex 08 (FR)**

(72) Inventeur: **Collomby, Michel**
**THOMSON-CSF SCPI 173 Bld. Haussmann**
**F-75379 Paris Cedex 08 (FR)**

(74) Mandataire: **Benoit, Monique et al**
**THOMSON-CSF SCPI 19, avenue de Messine**
**F-75008 Paris (FR)**

Courier Press, Leamington Spa, England.

## Description

La présente invention a pour objet un dispositif récepteur d'au moins deux systèmes de radio-navigation.

On connaît déjà des dispositifs récepteurs de radio-navigation destinés à déterminer la position d'un mobile à partir des émissions d'au moins deux systèmes de radio-navigation. De tels récepteurs permettent en effet une vérification par comparaison des mesures effectuées selon au moins deux systèmes. Il s'agit de récepteurs coûteux car ils résultent de la mise sous un même boîtier de deux récepteurs indépendants.

Le brevet US—A—3 936 763 décrit un dispositif d'amplification simultanée à deux fréquences de signaux de radio-navigation par exemple OMEGA sans modifier la phase de ces signaux (modulo 2π).

Le brevet US—A—3 936 828 décrit un dispositif de radio-navigation comportant une pluralité de récepteurs reliés par un multiplexeur à un ordinateur.

La présente invention a pour objet un dispositif récepteur de structure améliorée conduisant à un coût réduit.

L'invention concerne aussi un dispositif récepteur d'au moins deux systèmes de radio-navigation comportant des moyens de réception du signal de radio-navigation, un sélecteur à plusieurs positions, un circuit de contrôle automatique de gain, un circuit d'échantillonnage numérique recevant des impulsions de commande d'échantillonnage, une horloge, un microprocesseur recevant les signaux d'échantillonnage dudit circuit d'échantillonnage numérique et agencé pour effectuer un traitement des signaux et des calculs de position suivant lesdits systèmes de radio-navigation, caractérisé en ce que lesdits moyens de réception sont constitués par une pluralité de filtres de réception correspondant auxdits systèmes de radio-navigation et commutés par le sélecteur (14), que la sortie de sélecteur (14) est reliée par l'intermédiaire du circuit de contrôle automatique de gain (2) au circuit d'échantillonnage (3), qu'une base de temps recevant les signaux de la dite horloge divise ceux-ci dans un rapport permettant plusieurs échantillonnages durant un intervalle d'émission du système de radio-navigation comportant l'intervalle d'émission le plus long, pour délivrer lesdits impulsions de commande d'échantillonnage numérique et en ce que le microprocesseur est agencé, pour commuter séquentiellement ledit sélecteur et modifier le rapport de division de la base de temps de façon à synchroniser l'échantillonnage avec l'autre système de radio-navigation en sorte de réaliser un multiplexage temporel de la réception desdits systèmes.

Le micro-processeur peut être également agencé pour modifier séquentiellement le gain du circuit de contrôle automatique de gain.

Selon un mode de réalisation, le dispositif comporte, pour la réception d'un système de radio-navigation avec changement de fréquence, un mélangeur recevant le signal d'un oscillateur local et le micro-processeur est agencé pour commuter le sélecteur de telle sorte que le mélangeur reçoive également les signaux en sortie du filtre de réception du système à recevoir avec changement de fréquence, et qu'un filtre d'un autre système reçoive la sortie du mélangeur et que la sortie de ce dernier filtre constitue la sortie du sélecteur. Le système de radio-navigation à recevoir avec changement de fréquence peut être le système LORAN en phase de détection des interférences, l'oscillateur local étant accordable.

Le dispositif peut être adapté pour recevoir au moins trois systèmes de radio-navigation et comporter, pour la réception d'un premier système avec double changement de fréquence, deux mélangeurs de fréquence recevant chacun un signal d'un oscillateur local, et le micro-processeur être agencé pour commuter ledit sélecteur de telle sorte que le premier mélangeur reçoive également les signaux de sortie du filtre de réception du premier système, qu'un filtre d'un deuxième système reçoive les signaux de sortie du premier mélangeur, que le deuxième mélangeur reçoive également les signaux de sortie dudit filtre du deuxième système, qu'un filtre d'un troisième système reçoive les signaux de sortie du deuxième mélangeur, et que la sortie de ce dernier filtre constitue la sortie du sélecteur. Le premier système peut être ainsi choisi parmi le groupe comprenant les radio-balises, les radio-phares et les émetteurs de radio-goniométrie, le deuxième système être le LORAN, et le troisième l'OMEGA, et au moins le premier oscillateur local correspondant au premier mélangeur être accordable. Le premier système peut être, selon un mode préféré, l'OMEGA différentiel émis à partir de radio-balises ou de radio-phares.

Selon une variante avantageuse, un mélangeur est un interrupteur commandé par l'oscillateur local correspondant, au moins en présence d'un signal d'autorisation représentant la configuration du récepteur.

Selon un mode de réalisation, le micro-processeur est agencé de manière à cumuler les intervalles de temps programmés et à déterminer itérativement des temps morts entre la fin d'une période d'échantillonnage selon un système et le début d'une période d'échantillonnage selon un autre système, de telle sortie que chaque temps mort ne soit pas inférieur à une valeur donnée et pas supérieur à celle-ci augmentée de l'inverse de la fréquence d'échantillonnage d'un des deux systèmes, et que la reprise de synchronisation soit positionnée de manière stationnaire.

L'invention sera mieux comprise dans la description qui va suivre donnée à titre d'exemple non limitatif, en se reportant aux dessins ci-annexés où:

— la figure 1 représente un dispositif récepteur selon l'invention, mettant en oeuvre un multiplexage temporel,
— les figures 2a et 2b illustrent les échantillonnages OMEGS et LORAN,

— la figure 3 illustre la gestion de passage entre les échantillonnages OMEGA et LORAN,

— les figures 4 et 5 représentent des variantes préférées où on utilise au moins un filtre OMEGA pour un changement de fréquence intéressant la réception d'un autre système de radio-navigation,

— la figure 6 est une variante de la figure 4.

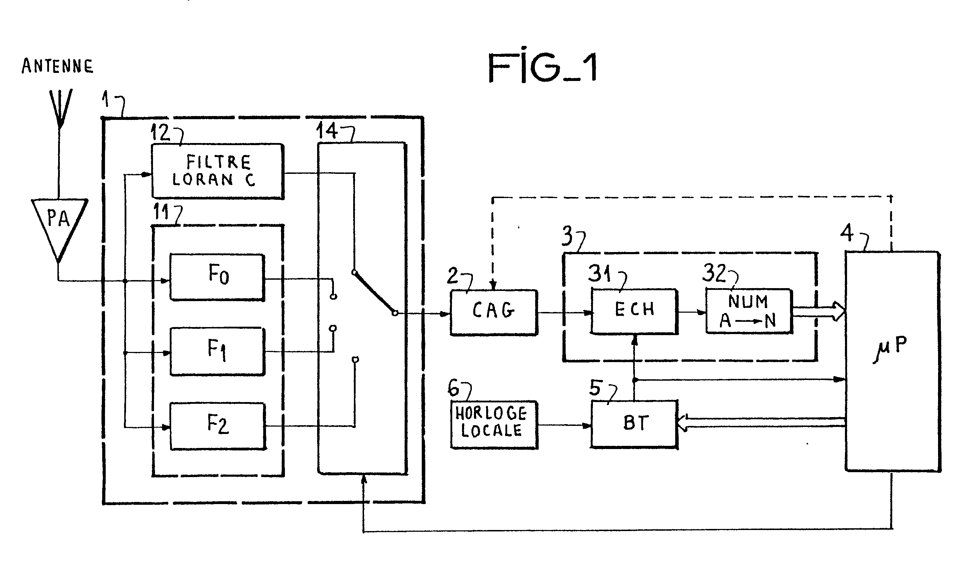

A la figure 1, un récepteur combiné selon les systèmes OMEGA et LORAN C comporte un circuit 1 de filtrage et de commutation qui comprend des filtres OMEGA 11, un filtre LORAN C 12 et un sélecteur 14. Les filtres OMEGA comprennent classiquement un filtre $F_0$ (10,2 KHz), un filtre $F_1$ (11,3 KHz), et un filtre $F_2$ (13,6 KHz) qui sont donc accordés sur les trois fréquences habituellement utilisées pour la détermination de la position du mobile. Chacun de ces filtres peut avoir entre ±10 et ±500 Hz de bande passante. Le filtre LORAN C 12 a une fréquence nominale de 100 KHz et une bande passante de ±10 KHz environ. Le sélecteur 14 commande, sous l'action d'une commande, les différents filtres ci-dessus pour relier tour à tour leur sortie à l'entrée d'un circuit 2 de contrôle automatique de gain qui attaque un circuit d'échantillonnage numérique 3 composé d'un échantillonneur 31 et d'un convertisseur numérique-analogique 32.

L'échantillonneur 31 est commandé par une base de temps 5 qui reçoit des impulsions d'une horloge locale 6. La position du sélecteur 14, ainsi que le rapport de division de la base de temps 5 sont commandés par un micro-processeur 4 de telle sorte qu'on réalise un multiplexage temporel de la réception des systèmes OMEGA et LORAN C. Le circuit 2 de contrôle automatique de gain peut être autonome ou bien commandé par le micro-processeur 4, de telle sorte que son gain corresponde à un maximum de bits significatifs lors de la numérisation en 32. Le circuit 2 peut être ainsi un amplificateur à gain programmable par pas. Plus spécifiquement, la valeur du gain nécessaire dans l'amplificateur à gain programmable est liée à tout moment à la station en cours de réception, elle-même connue grâce d'une part au filtre d'entrée commuté (fréquence de réception) et à la synchronisation du système (station active à l'instant donnée sur la fréquence reçue). Pour le système OMEGA, on a 3 fréquences et 8 stations soit 24 valeurs de gain possibles stockées, et pour le système LORAN C, on a une fréquence et 5 stations au maximum soit 5 valeurs possibles stockées. Ces valeurs sont déterminées en examinant la sortie du convertisseur analogique-numérique 32 et en augmentant le gain de l'amplificateur 2 jusqu'à obtenire un pourcentage d'échantillons écrêtés dans le convertisseur 32 égal par exemple à 10%. Ces boucles de contrôle automatique de gain, individuelles pour chaque station, sont stabilisées lentement à partir d'une valeur initiale moyenne. Le micro-processeur dispose ainsi en mémoire des valeurs de gain à affecter à chaque station, et commande l'étage CAG 2 simultanément avec le filtre à utiliser et l'instant d'échantillonnage. La commande peut ainsi s'effectuer en faisant varierles gains dans un rapport $\sqrt{2}$ à chaque changement de valeur et avec 4 bits, soit 16 valeurs de gain possibles, ce qui suffit à couvrir la dynamique de réception.

La base de temps 5 peut être un générateur d'intervalles programmables de temps (par exemple circuit 6840 de MOTOROLA), permettant de réaliser un échantillonnage aux instants donnés par le programme du micro-processeur 4.

Comme le système OMEGA utilise des créneaux temporels regroupés par 8 en formats de 10 secondes, alors que le système LORAN C travaille en régime impulsionnel à une cadence de répétition bien plus rapide (40 à 100 ms), on choisira avantageusement 10 secondes comme unité de temps pour le multiplexage entre les deux systèmes, avec synchronisation sur les créneaux OMEGA de manière à correspondre à 8 créneaux consécutifs, de préférence de même format OMEGA.

On va maintenant décrire une séquence de fonctionnement à partir de la mise en service. La première étape consiste à acquérir la synchronisation sur les formats OMEGA. On fait fonctionner le dispositif comme un récepteur OMEGA, avec commutation entre les filtres $F_0$, $F_1$ et $F_2$ jusqu'à ce qu'on acquière la synchronisation sur les formats OMEGA, de manière à caler les périodes de multiplexage sur les formats OMEGA. La seconde étape consiste à acquérir la synchronisation par les deux systèmes. A la condition que l'horloge locale 6 soit suffisamment stable, au moins statistiquement, cette opération peut être réalisée avec un fonctionnement multiplexé. On effectue une accumulation statistique sur un certain nombre de formats OMEGA, par exemple 5 à 10 pour chacun des systèmes, de manière à retrouver une information de position. Lors du multiplexage, le micro-processeur 4 garde en mémoire le cumul des impulsions de l'horloge locale 6, en tenant à jour les informations des échantillonnages précédents. Les instructions données à la base de temps 5 consistent à lui or donner de produire une impulsion d'échantillonnage après un nombre programmable de sauts d'impulsions de l'horloge locale 6. Dans ces conditions, le cumul de ces ordres de saut est représentatif du cumul du nombre d'impulsions de l'horloge locale 6. Le dispositif peut alors fonctionner continûment en multiplexage, à savoir alternativement comme un récepteur OMEGA pendant un format OMEGA, et comme un récepteur LORAN C pendant le format suivant.

Le cumul des impulsions de l'horloge locale 6 est utilisé pour commander le multiplexage et pour effectuer la reprise de synchronisation qui est pratiquement immédiate lors de la commutation d'un système à l'autre.

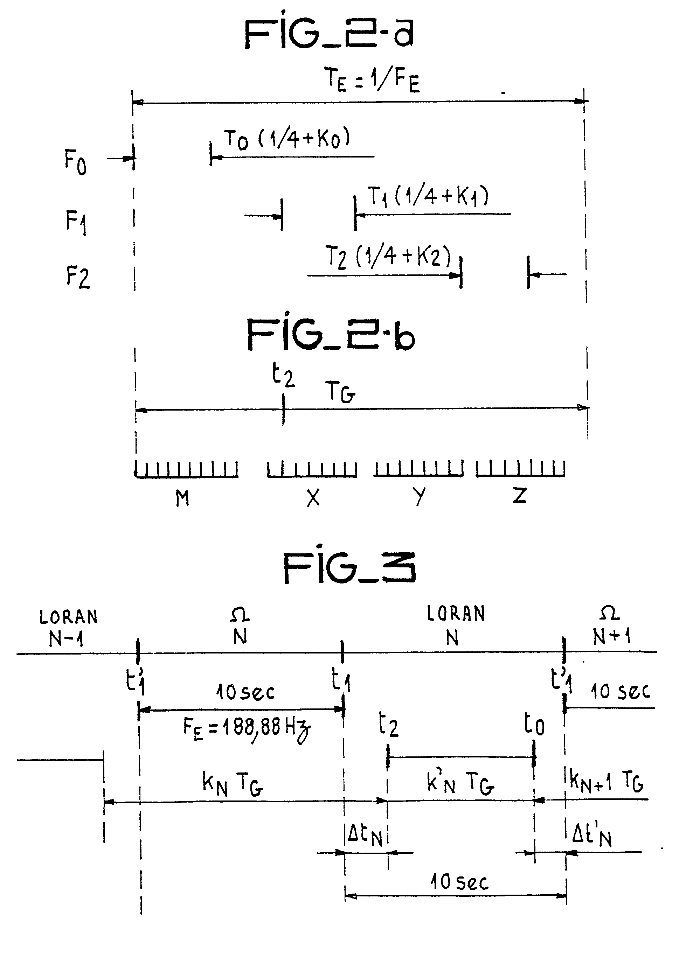

Selon la figure 2a, le traitement OMEGA est réalisé par échantillonnage sur les trois fréquences 10,2, 11,3 et 13,6 KHz à l'aide d'impulsions regroupées par paires en quadrature c'est-à-dire espacées de $\pi/2$ (respectivement de 24, 22 et 18 micro-secondes), modulo $2\pi$. La fréquence

d'échantillonnage $F_E$ choisie est une fréquence sous-multiple des trois fréquences OMEGA précitées, par exemple 188, 88 Hz. Soient $T_0$, $T_1$ et $T_2$ les périodes correspondantes des fréquences $F_0$, $F_1$ et $F_2$, et $K_0$, $K_1$ et $K_2$ des nombres entiers $\geq 0$. Pendant une période

$$\frac{1}{F_E}$$

le micro-processeur 4 produit une séquence de 3 paires d'impulsions d'échantillonnage avec des espacements respectivement de $T_0$ $(1/4+K_0)$, $T_1$ $(1/4+K_1)$ et $T_2$ $(1/4+K_2)$, les premières impulsions des paires successives étant de préférence espacées de

$$\frac{1}{3F_E}$$

Les valeurs de $K_0$, $K_1$ et $K_2$ sont choisies de manière à répartir de manière homogène les impulsions d'échantillonnage pendant la période $T_E$, 0, 9 à 1,2 seconde selon les créneaux. Ainsi, chaque format OMEGA commence et se termine par un temps mort, la partie utile du premier et du dernier créneau étant en effet respectivement de 0,9 et de 1 seconde. Il suffit donc de commuter toutes les dix secondes les filtres entre le système OMEGA et le système LORAN C et de générer les cadences d'échantillonnages correspondantes. La tenue à jour du cumul des impulsions de l'horloge locale permet de ne pas prendre la synchronisation d'un système lorsque le dispositif fonctionne selon l'autre système.

Selon la figure 2b, le système LORAN C comporte des émissions de trains d'impulsions à partir de 4 stations locales, une station maître et trois stations esclaves X, Y et Z, à une cadence de répétition $T_G$ qui peut valoir de 40 à 100 ms environ suivant les groupes de stations locales. Chaque station émet tour à tour 8 impulsions. Pour chaque impulsion, on réalise trois échantillons, soit 96 échantillons par intervalle $T_G$.

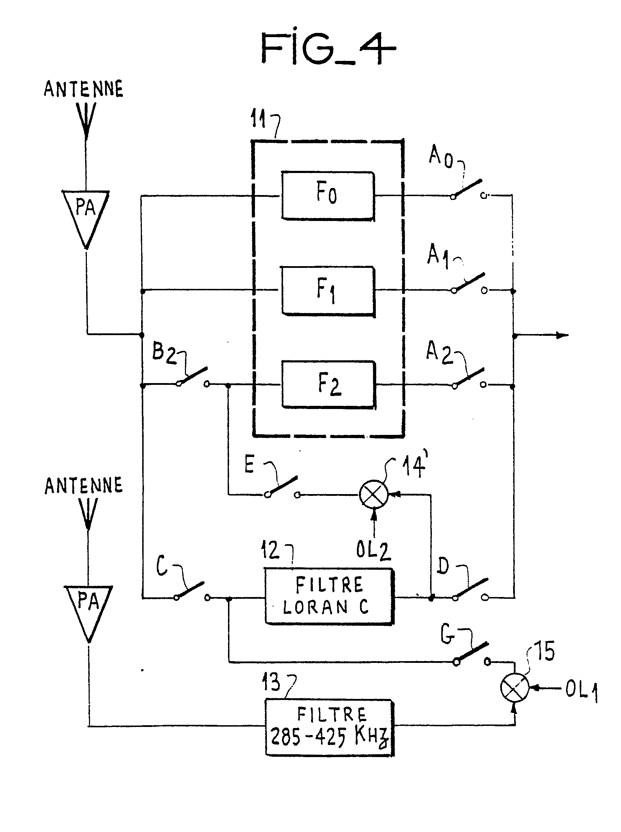

La figure 3 montre donc la succession de quatre périodes de 10 secondes synchronisées sur les formats OMEGA destinés à la réception multiplexée de l'OMEGA et du LORAN C, à savoir les périodes correspondant au $(N-1)^{ième}$ et au $N^{ième}$ fonctionnement suivant le système LORAN C, ainsi qu'au $N^{ième}$ et au $(N+1)^{ième}$ fonctionnement suivant le système OMEGA. La synchronisation sur les formats OMEGA donne l'instant $t_1$ à une cadence de 10 secondes. La transition entre l'échantillonnage OMEGA et l'échantillonnageLORAN C est alors réalisé de la manière suivante.

Par cumul des intervalles programmés par le micro-processeur au niveau de la base de temps 5, la date exacte de la fin de la $N^{ième}$ période OMEGA est connue. Si on suppose que la $N^{ième}$ période OMEGA est celle pour laquelle la synchronisation OMEGA est réputée acquise, on choisit arbitrairement un intervalle ou temps mort

$\Delta t_N$ choisi de manière appropriée, par exemple compris entre 0,5 et 1,5 $T_G$ et l'échantillonnage LORAN C est déclenché à partir du temps $t_2$ situé à la fin de cet intervalle. Comme indiqué à la figure 2b, ce temps $t_2$ est positionné de manière quelconque par rapport aux périodes d'émissions LORAN C. A partir de ce temps $t_2$, le micro-processeur prévoit quel sera l'instant $t_0$ situé dans la $N^{ième}$ période correspondant à l'échantillonnage LORAN C le plus favorable pour arrêter l'échantillonnage. Cet instant $t_0$ est d'une part séparé de $t_2$ par un intervalle $K'_N$ $T_G$ avec $K_N$ entier, et d'autre part séparé de l'instant $t'_1$ début de la $(N+1)^{ième}$ période correspondant à un échantillonnage OMEGA, par un temps $\Delta t'_N$ inférieur ou égal à $T_G$.

Pour la $(N+1)^{ième}$ période d'échantillonnage LORAN, le micro-processeur calcule l'intervalle $K_{N+1}$ $T_G$ séparant l'instant $t_0$ de la $N^{ième}$ période d'échantillonnage LORAN, de l'instant $t_2$ de la $(N+1)^{ième}$ période d'échantilonnage LORAN. D'une part, $K_{N+1}$ est un nombre entier et d'autre part $\Delta t_N$ doit être aussi petit que possible, avec toutefois une valeur inférieure imposée, par exemple 0,5 $T_G$, pour que le micro-processeur ait le temps de réaliser les commutations nécessaires. Dans ces conditions, $\Delta t_N$ fluctuera entre 0,5 et 1,5 $T_G$, pour les périodes d'échantillonnages suivantes, le cycle de poursuivant tant que le dispositif est maintenu en service.

La figure 4 représente une récepteur OMEGA-LORAN C-Bande 285—425 KHz selon un mode préféré de réalisation de l'invention. On retrouve les filtres 11 et 12 de la figure 1 ainsi que le circuit de commutation 14 sous la forme de commutateurs $A_0$, $A_1$, $A_2$ et D disposés en sortie des filtres respectivement $F_0$, $F_1$, $F_2$ et 12. Dans ce mode de réalisation, le circuit de commutation est plus élaboré, étant donné qu'il se voit adjoindre les commutateurs permettant d'utiliser le filtre LORAN C et un filtre OMEGA, par exemple $F_2$, pour réaliser un double changement de fréquence destiné à la réception des émissions de radio-goniométrie, des radio-phares ou des radio-balises.

Plus spécifiquement, un filtre 13 est associé à une antenne pouvant recevoir les trois systèmes. Le filtre 13 a une bande passante s'étendant de 285 à 425 KHz de telle sorte qu'il convienne aussi bien à la radio-goniométrie qu'aux radio-phares et aux radio-balises, notamment pour la réception des émissions des corrections OMEGA différentiel. Le filtre 13 est relié à un mélangeur 15. Le mélangeur 15 reçoit également les signaux d'un oscillateur local $OL_1$ et sa sortie est reliée à l'entrée du filtre LORAN C 12 à travers un commutateur G. La sortie du filtre LORAN C 12 est reliée, en amont du commutateur D, à un mélangeur 14' qui reçoit également les signaux d'un oscillateur local $OL_2$ et dont la sortie est reliée à l'entrée du filtre $F_2$ par l'intermédiaire d'un commutateur E.

Le fonctionnement en multiplexage permet alors les trois type de réception suivants:

a) réception OMEGA: les commutateurs D, G et E sont ouverts; un commutateur $B_2$ disposé en

amont de $F_2$ est fermé et les commutateurs $A_0$, $A_1$ et $A_2$ sont commandés tour à tour à la fermeture pour permettre la réception échantillonné de trois fréquences OMEGA habituelles.

b) réception LORAN C: les commutateurs $A_0$, $A_1$, $A_2$ et G sont ouverts, et un commutateur C disposé en amont du filtre LORAN C 12 est fermé ainsi que le commutateur D.

c) réception de la bande 285—425 KHz: les commutateurs $A_0$, $A_1$, $B_2$, C et D sont ouverts, et les commutateurs $A_2$, E et G sont fermés. Les signaux sortants du filtre 13 sont alors introduits dans le filtre LORAN C 12 après passage dans le mélangeur 15, puis dans le filtre $F_2$ après passage dans le mélangeur 14. Les filtres LORAN C et $F_2$ font alors fonction de filtres de fréquence intermédiaire pour la réception 285—425 KHz.

Le fonctionnement en réception dans la bande 285—425 KHz va maintenant être explicité de manière plus détaillée. Le filtre $F_2$ ayant une fréquence de 13,6 KHz, et si on choisit un oscillateur local $OL_2$ de fréquence fixe $FO_2$, la première fréquence intermédiaire $FI_1$ aura alors pour valeur, exprimée en KHz:

$$FI_1 = FO_2 - 13,6$$

$FI_1$ doit se situer dans la bande passante du filtre LORAN C 12. Si on prend $FO_2 = 125$ KHz, au aura $FI_1 = 111,4$ KHz qui est situé en bord de bande du filtre LORAN C 12. Ce choix permet cependant d'éloigner le plus possible la fréquence image deuxième changement de fréquence, à savoir $FI_1 + 2\ F_2$ soit dans le cas d'espèce 138,6 KHz.

L'accord sur la bande 285 à 425 KHz est réalisé par l'oscillateur local $OL_1$, en l'occurence un synthétiseur dont la fréquence varie entre $285 + FI_1$ et $425 + FI_1$, soit dans le cas d'espèce entre 396,4 et 536,4 KHz. La fréquence image du premier changement de fréquence évolue entre $285 + 2\ FI_1$ et $425 + 2\ FI_1$, soit dans le cas d'espèce entre 507,8 et 647,8 KHz.

En pratique on utilisera avantageusement un synthétiseur $OL_1$ dont la fréquence de sortie varie par pas de 100 ou 200 Hz et un filtre $F_2$ de bande passante 300 Hz. Ces paramètres sont particulièrement bien adaptés aussi bien à la réception OMEGA qu'à la réception dans la bande 285—425 KHz, et tout particulièrement dans le cas de la réception d'émissions OMEGA différentiel obtenues par modulation de phase d'un radio-phare ou d'une radio-balise. On peut également utiliser un synthétiseur pour l'oscillateur local $OL_2$ pour réaliser un réglage fin de la fréquence.

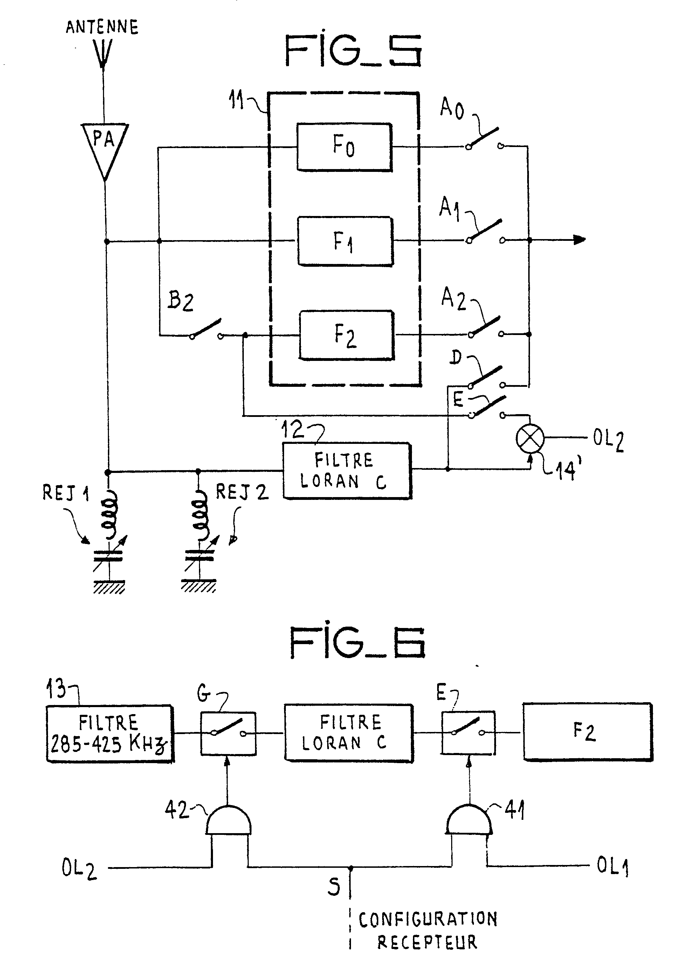

La figure 5 représente un récepteur OMEGA-LORAN C dans lequel on utilise un filtre OMEGA, par exemple $F_2$, pour réaliser des mesures d'interférence LORAN C, afin de détecter les émissions se situant au voisinage de la bande 90—110 KHz utile pour le système LORAN C, et de mesurer leur fréquence. Il suffira alors d'accorder un ou plusieurs réjecteurs appropriés pour supprimer toute interférence. A titre d'émission susceptible de provoquer des interférences, on peut citer les fréquences 85 KHz et 112 KHz du système DECCA.

Plus spécifiquement, la figure 5 comporte des éléments déjà décrits dans la figure 4, à savoir les filtres $F_0$, $F_1$, $F_2$ et 12, et les commutateurs $A_0$, $A_1$, $A_2$, $B_2$, D et E ainsi que le mélangeur 14 recevant les signaux de l'oscillateur local $OL_2$.

Pour la détection des interférences, le filtre LORAN C 12 reçoit les signaux de la bande LORAN C 90—110 KHz et des bandes latérales 70—90 KHz et 110—130 KHz, les bandes latérales étant bien entendu atténuées par le filtre 12. L'oscillateur local $OL_2$ est un synthétiseur de fréquence variable choisi de telle manière que les bandes latérales 70—90 KHz et 110—130 KHz sont amenées par changement de fréquence à la fréquence de 13,6 KHz.

Pour la bande 70—90 KHz, la fréquence $FO_2$ de l'oscillateur local $OL_2$, peut varier entre 70—13,6 et 90—13,6 KHz soit entre 57,4 et 77,4 KHz, avec une fréquence image égale à $FO_2 - 13,6$, soit variant entre 43,8 et 63,8 KHz.

Pour la bande 110—130 KHz, la fréquence $FO_2$ du synthétiseur $OL_2$ peut varier entre $110 + 13,6$ et $130 + 13,6$ KHz, soit entre 123,6 et 143,6 KHz, avec une fréquence image égale à $FO_2 + 13,6$, soit variant entre 137,2 et 157,2 KHz.

On utilisera avantageusement un synthétiseur $OL_2$ dont la fréquence varie par pas de 200 Hz ou 500 Hz avec un ou plusieurs réjecteurs, de bande passante 1 KHz. On a ainsi représenté à la figure 5 deux réjecteurs $REJ_1$ et $REJ_2$ accordables par un condensateur variable, (en variante, on peut également utiliser une diode à capacité variable commandée en tension par le micro-processeur), et que l'on peut régler chacun sur une émission reçue sur une bande latérale.

La figure 6 est une variante de l'invention suivant le mode de réalisation de la figure 4. On utilise les commutateurs E et G comme mélangeurs. Pour ce faire, les commutateurs $OL_1$ et $OL_2$ reçoivent la sortie d'une porte ET respectivement 41 et 42. Une des entrées de chacune des portes ET 41 et 42 reçoit un signal S représentant la configuration du récepteur, à savoir un 1 logique quand le multiplexage fait intervenir la réception dans la bande 285—425 KHz. L'autre entrée des portes ET 41 et 42 reçoit des signaux en provenant de l'horloge locale correspondante, à savoir respectivement $OL_1$ et $OL_2$, convenablement mis en forme, c'est-à-dire qu'ils commutent de 0 à 1 à la fréquence désirée. On obtient ainsi un changement de fréquence avec un minimum de composants. Lorsque le dispositif de réception est dans la configuration de réception OMEGA ou LORAN C, le signal S est au niveau logique 0, et donc les sorties des portes ET 41 et 42. Les commutateurs E et G sont alors ouverts.

## Revendications

1. Dispositif récepteur d'au moins deux systèmes de radio-navigation comportant des moyens de réception (11, 12, 13) du signal de radio-navigation, un sélecteur (14) à plusieurs positions, un circuit (2) de contrôle automatique de gain, un circuit d'échantillonnage numérique (3) recevant des impulsions de commande d'échantillonnage, une horloge locale (6), un microprocesseur (4) recevant les signaux d'échantillonnage dudit circuit d'échantillonnage numérique (3) et agencé pour effectuer un traitement de signaux et des calculs de position suivant lesdits systèmes de radio-navigation, caractérisé en ce que lesdits moyens de réception sont constitués par une pluralité de filtres de réception (11, 12, 13) correspondant auxdits systèmes de radio-navigation et commutés par le sélecteur (14), que la sortie du sélecteur (14) est reliée par l'intermédiaire du circuit de contrôle automatique de gain (2) au circuit d'échantillonnage (3), qu'une base de temps (5) recevant les signaux de ladite horloge (6) divise ceux-ci dans un rapport permettant plusieurs échantillonnages durant un intervalle d'émission du système de radio-navigation comportant l'intervalle d'émission le plus long, pour délivrer lesdites impulsions de commande d'échantillonnage numérique et en ce que le microprocesseur (4) est agencé, pour commuter séquentiellement ledit sélecteur (14) et modifier le rapport de division de la base de temps (5) de façon à synchroniser l'échantillonnage avec l'autre système de radio-navigation en sorte de réaliser un multiplexage temporel de la réception desdits systèmes.

2. Dispositif selon la revendication 1, caractérisé en ce que le micro-processeur (4) est agencé pour modifier séquentiellement également le gain du circuit (2) de contrôle automatique de gain.

3. Dispositif selon l'une des revendications 1 ou 2, caractérisé en ce que, pour la réception d'un système de radio-navigation avec changement de fréquence, il comporte un mélangeur (14) recevant un signal d'un oscillateur local (OL₂), en ce que le micro-processeur et agencé pour commuter le sélecteur (14) de telle sorte que le mélangeur (14) reçoive également les signaux en sortie du filtre de réception du système à recevoir avec changement de fréquence, qu'un filtre d'un autre système reçoive la sortie du mélangeur (14) et que la sortie de ce dernier filtre constitue la sortie du sélecteur.

4. Dispositif selon l'une des revendications 1 à 3, caractérisé en ce que le récepteur est adapté pour recevoir au moins trois systèmes de radio-navigation, en ce que, pour la réception d'un premier système avec double changement de fréquence, il comporte deux mélangeurs de fréquence (14, 15) recevant chacun un signal d'un oscillateur local (OL₁, OL₂), et en ce que le micro-processeur (4) est agencé pour commuter ledit sélecteur de telle sorte que le premier mélangeur (15) reçoive également les signaux de sortie du fient les signaux de sortie du filtre de réception du premier système, qu'un filtre d'un deuxième système reçoive les signaux de sortie du premier mélangeur (15), que le deuxième mélangeur (14) reçoive également les signaux de sortie dudit filtre du deuxième système, qu'un filtre d'un troisième système reçoive les signaux de sortie du deuxième mélangeur (14), et que la sortie de ce dernier filtre constitue la sortie du sélecteur (14).

5. Dispositif selon la revendication 4, caractérisé en ce que le premier système est choisi parmi le groupe comprenant les radio-balises, les radio-phares et les émetteurs de radio-goniométrie, que le deuxième système est le système LORAN, en ce que le troisième système est le système OMEGA, et en ce que au moins le premier oscillateur local (OL₁) correspondant au premier mélangeur (15) est accordable.

6. Dispositif selon la revendication 5, caractérisé en ce que le premier système est le système OMEGA différentiel émis à partir de radio-balises ou de radio-phares.

7. Dispositif selon la revendication 3, caractérisé en ce que le système de radio-navigation à recevoir avec changement de fréquence est le système LORAN en phase de détection des interférences et en ce que ledit oscillateur local (OL₂) est accordable.

8. Dispositif selon l'une des revendications 3 à 7, caractérirsé en ce qu'un oscillateur local (OL₁, OL₂) est un synthétiseur.

9. Dispositif selon l'une des revendications 3 à 8, caractérisé en ce qu'un mélangeur (14, 15) est un interrupteur (E, G) commandé par l'oscilateur local correspondant (OL₁, OL₂), au moins en presence d'un signal d'autorisation (S) représentant la configuration du récepteur.

10. Dispositif selon la revendication 9, caractérisé en ce que ledit interrupteur (E, G) reçoit le signal de sortie d'une porte ET (41, 42), qui reçoit à une entrée le signal de l'oscillateur local correspondant (OL₁, OL₂) et à son autre entrée ledit signal logique d'autorisation (S).

11. Dispositif selon l'une des revendications précédentes, caractérisé en ce que le micro-processeur (4) est agencé de manière à cumuler les intervalles de temps programmés et à déterminer itérativement des temps morts ($\Delta t_N$, $\Delta t'_N$) entre la fin d'une période d'échantillonnage selon un système et le début d'une période d'échantillonnage selon un autre système, de telle sorte que chaque temps mort ne soit pas inférieur à une valeur donnée et pas supérieur à celle-ci augmentée de l'inverse de la fréquence d'échantillonnage d'un des deux systèmes, et que la reprise de synchronisation soit positionnée de manière stationnaire.

**Patentansprüche**

1. Empfängevorrichtung für wenigstens zwei Funknavigationssysteme, mit Empfangsmitteln (11, 12, 13) für das Funknavigationssignal, einem Wähler (14) mit mehreren Stellungen, einer Schaltung (2) zur automatischen Verstärkungsregelung, einer digitalen Abtastschaltung (3), welche Abtaststeuerimpulse empfängt, einem lokalen Taktgeber (6), einem Mikroprozessor (4), welcher die Abtastsignale der genannten digitalen Abtastschaltung (3) empfängt und ausgebildet ist, um eine Verarbeitung der Signale und Positionsberechnungen gemäß den beiden Funknavigationssystemen auszuführen, dadurch gekennzeichnet, daß die genannten Empfangsmittel gebildet sind durch eine Mehrzahl von Empfangsfiltern (11, 12, 13), welche den genannten Funknagivationssystemen entsprechen und durch den Wähler (14) umgeschaltet werden, daß der Ausgang des Wählers (14) über die automatische Verstärkungsregelschaltung (2) mit der Abtastschaltung (3) verbunden ist, daß eine Zeitbasis (5), welche die Signale von dem genannten Taktgeber (6) empfängt, diese in einem Verhältnis teilt, welches mehrere Abtastungen während eines Sendeintervalls des Funknavigationssystems zuläßt, welches das längste Sendeintervall enthält, um die genannten Digital-Abtaststeuerimpulse abzugeben, und daß der Mikroprozessor (4) ausgebildet ist, um den genannten Wähler (14) sequentiell umzuschalten und das Teilungsverhältnis der Zeitbasis (5) derart zu verändern, daß die Abtastung mit dem anderen Funknavigationssystem synchronisiert wird une eine Zeitmultiplexierung für den Empfang der genannten Systeme verwirklicht wird.

2. Vorrichtung nach Anspruch 1, dadurch gekennzeichnet, daß der Mikroprozessor (4) derart ausgebildet ist, daß er auch die Verstärkung der automatischen Verstärkungssteuerschaltung (2) sequentiell verändert.

3. Vorrichtung nach Anspruch 1 oder 2, dadurch gekennzeichnet, daß sie für den Empfang eines Funknavigationssystems mit Frequenzänderung einen Mischer (14) umfaßt, der ein Lokaloszillatorsignal ($L_2$) empfängt, daß der Mikroprozessor derart ausgebildet ist, daß er den Wähler (14) in solcher Weise umschaltet, daß der Mischer (14) auch die Signale am Ausgang des Empfangsfilters des zu empfangenden Systems mit Frequenzänderung empfängt, daß ein Filter eines anderen Systems das Ausgangssignal des Mischers (14) empfängt und daß der Ausgang dieses letzteren Filters den Ausgang des Wählers bildet.

4. Vorrichtung nach einem der Ansprüche 1 bis 3, dadurch gekennzeichnet, daß der Empfänger angepaßt ist, um wenigstens drei Funknagivationssysteme zu empfangen, daß sie für den Empfang eines ersten Systems mit doppelter Frequenzänderung zwei Frequenzmischer (14, 15) enthält, die jeweils ein Signal eines Lokaloszillators ($OL_1$, $OL_2$) empfangen, und daß der Mikroprozessor (4) derart ausgebildet ist, daß er den genannten Wähler in solcher Weise umschaltet, daß der ersten Mischer (15) auch die Signale vom Ausgang des Empfangsfilters des ersten Systems empfängt, daß ein Filter eines zweiten Systems die Signale vom Ausgang des ersten Mischers (15) empfängt, daß der zweite Mischer (14) auch die Signale vom Ausgang des genannten Filters des zweiten Systems ampfängt, daß ein Filter eines dritten Systems die Signale vom Ausgang des zweiten Mischers (14) empfängt und daß der Ausgang dieses letteren Filters den Ausgang des Wählers (14) bildet.

5. Vorrichtung nach Anspruch 4, dadurch gekennzeichnet, daß das erste System unter der Gruppe ausgewählt ist, welche die Funkbaken, Funkfeuer und Funkgoniometriesender enthält, daß das zweite System das System LORAN ist, daß das dritte System das System OMEGA ist und daß wenigstens der erste Lokaloszillator ($OL_1$), welcher dem ersten Mischer (15) entspricht, abstimmbar ist.

6. Vorrichtung nach Anspruch 5, dadurch gekennzeichnet, daß das erste System das differentielle OMEGA System ist, welches von Funkbaken oder Funkfeuern gesendet wird.

7. Vorrichtung nach Anspruch 3, dadurch gekennzeichnet, daß das zu empfangende Funknavigationssystem mit Frequenzänderung das System LORAN in der Interferenz-Detektionsphase ist und daß der genannte Lokaloszillator ($OL_2$) abstimmbar ist.

8. Vorrichtung nach einem der Ansprüche 3 bis 7, dadurch gekennzeichnet, daß ein Lokaloszillator ($OL_1$, $OL_2$) eine Syntheseschaltung ist.

9. Vorrichtung nach einem der Ansprüche 3 bis 8, dadurch gekennzeichnet, daß ein Mischer (14, 15) ein Unterbrecher (E, G) ist, welcher durch den entsprechenden Lokaloszillator ($OL_1$, $OL_2$) gesteuert ist, wenigstens bei Anwesenheit eines Freigabesignals (S), welches die Konfiguration des Empfängers darstellt.

10. Vorrichtung nach Anspruch 9, dadurch gekennzeichnet, daß der genannte Unterbrecher (E, G) das Ausgangssignal einer AND-Torschaltung (41, 42) empfängt, welcher an einem Eingang das Signal des entsprechenden Lokaloszillators ($OL_1$, $OL_2$) und an seinem anderen Eingang das genannte logische Freigabesignal (S) empfängt.

11. Vorrichtung nach einem der vorstehenden Ansprüche, dadurch gekennzeichnet, daß der Mikroprozessor (4) derart ausgebildet ist, daß er die programmierten Zeitintervalle kumuliert und daß er iterative Totzeiten ($\Delta t_N$, $\Delta t'_N$) zwischen dem Ende einer Abtastperiode gemäß einem System und dem Beginn einer Abtastperiode gemäß einem anderen System bestimmt, dergestalt, daß jede Totzeit nicht kleiner ist als ein gegebener Wert und nicht größer als dieser, um dem Kehrwert der Abtastfrequenz eines der zwei Systeme vergrößerte Wert ist, und daß die Wiederaufnahme der Synchronisation stationär eingestellt ist.

**Claims**

1. Receiver device of at least two radio-navigation systems comprising means (11, 12, 13) for the reception of the radio-navigation signal, a selector (14) having a plurality of positions, an automatic gain control circuit (2), a digital sampling circuit (3) receiving sampling control pulses, a clock (6), a microprocessor (4) receiving the sampling signals from said digital sampling circuit (3) and arranged to perform a processing of the signals and computations of positions in accordance with said radio-navigation systems, characterized in that said reception means are constituted by a plurality of reception filters (11, 12, 13) corresponding to said radio-navigation systems and switched by the selector (14), that the output of the selector (14) is connected to the sampling circuit (3) through the automatic gain control circuit (2), that a time base (5) receiving the signals of said clock (6) divides the latter in a ratio permitting a plurality of samplings during a transmission interval of the radio-navigation system comprising the longest transmission interval, to supply said digital sampling control pulses, and in that the microprocessor (4) is arranged for the sequential switching of said selector (14) and modifying the ratio of division of the time base (5) in a manner to synchronize the sampling with the other radio-navigation system so that a time multiplexing of the reception of said systems is obtained.

2. Device according to claim 1, characterized in that the microprocessor (4) is arranged for likewise sequentially modifying the gain of the automatic gain control circuit (2).

3. Device according to any of claims 1 and 2, characterized in that, for the reception of a radio-navigation system with frequency change, it comprises a mixer (14) receiving a local oscillator ($OL_2$) signal, in that the microprocessor is arranged for switching the selector (14) in such a manner that the mixer (14) likewise receives the output signals of the reception filter of the system to be received with frequency change, that a filter of another system receives the output of the mixer (14) and that the output of the latter filter constitutes the output of the selector.

4. Device according to any of claims 1 to 3, characterized in that the receiver is adapted for receiving at least three radio-navigation systems, in that, for the reception of a first system with double frequency change, it comprises two frequency mixers (14, 15) each receiving a local oscillator ($OL_1$, $OL_2$) signal, and in that the microprocessor (4) is arranged for switching said selector in such a manner that the first mixer (15) likewise receives the output signals of the reception filter of the first system, that a filter of a second system receives the output signals of the first mixer (15), that the second mixer (14) likewise receives the output signals of said filter of the second system, that a filter of a third system receives the output signals of the second mixer (14), and that the output of the latter filter constitutes the output of the selector (14).

5. Device according to claim 4, characterized in that the first system is selected among the group comprising the radio buoies, radio beacons and the radio-goniometry transmitters, that the second system is the LORAN system, in that the third system is the OMEGA system and in that at least the first local oscillator ($OL_1$) corresponding to the first mixer (15) is tunable.

6. Device according to claim 5, characterized in that the first system is the differential OMEGA system transmitted from the radio buoies or radio-beacons.

7. Device according to claim 3, characterized in that the radio-navigation system to be received with frequency change is the LORAN system in the phase of detection of interferences, and in that said local oscillator ($OL_2$) is tunable.

8. Device according to any of claims 3 to 7, characterized in that a local oscillator ($OL_1$, $OL_2$) is a synthesizer.

9. Device according to any of claims 3 to 8, characterized in that a mixer (14, 15) is an interrupter (E, G) controlled by the corresponding local oscillator ($OL_1$, $OL_2$), at least in the presence of an enabling signal (S) representing the configuration of the receiver.

10. Device according to claim 9, characterized in that said interrupter (E, G) receives the output signal of an AND gate (41, 42) one input of which receives the corresponding local oscillator signal ($OL_1$, $OL_2$) and the other input of which receives said logic enabling signal (S).

11. Device according to any of the preceding claims, characterized in that the microprocessor (4) is arranged in a manner to cumulate the programmed time intervals and to determine iteratively dead times ($\Delta t_N$, $\Delta t'_N$) between the end of a sampling period according to one system at the beginning of a sampling period according to another system, in such a manner that each dead time is not smaller than a given value and not greater than the latter increased by the inverted sampling frequency of one of the two systems, and that the resumption of synchronization is positioned in stationary manner.

FIG_1

μP

4

32  NUM A→N

3  31  ECH

5  BT

2  CAG

6  HORLOGE LOCALE

14

12  FILTRE LORAN C

11

F0

F1

F2

1

PA

ANTENNE

# FIG_2-a

$$T_E = 1/F_E$$

$F_0$

$$T_0 \ (1/4 + K_0)$$

$F_1$

$$T_1 \ (1/4 + K_1)$$

$F_2$

$$T_2 \ (1/4 + K_2)$$

# FIG_2-b

$t_2$  $T_G$

M    X    Y    Z

# FIG_3

| LORAN N-1 | $\Omega$ N | LORAN N | $\Omega$ N+1 |

$t'_1$

10 sec

$t_1$

$$F_E = 188,88 \ Hz$$

$t_2$    $t_0$    $t'_1$    10 sec

$k_N \ T_G$    $k'_N \ T_G$    $k_{N+1} \ T_G$

$\Delta t_N$    $\Delta t'_N$

10 sec

# FIG_4

ANTENNE

PA

11

F0

A0

F1

A1

B2

F2

A2

E

14'

OL2

12

C

FILTRE LORAN C

D

ANTENNE

PA

G

15

13

FILTRE 285-425 KHz

OL1

ANTENNE

## FIG_5

11

PA

F0          A0

F1          A1

B2

F2          A2

D

E

12

FILTRE
LORAN C

OL2

14'

REJ 1       REJ 2

## FIG_6

13

FILTRE
285-425 KHz

G

FILTRE
LORAN C

E

F2

42

41

OL2

S

OL1

CONFIGURATION
RECEPTEUR